# EUROPEAN PATENT APPLICATION

(11) **EP 3 903 968 A1**
(43) Date of publication of application: **03.11.2021**
(21) Application number: 20305409.3
(22) Date of filing: 28.04.2020
(51) Int. Cl.: B22F 3/00, B33Y 30/00, B33Y 70/10, B22F 1/00

(54) **COMPOSITION FOR 3D PRINTING COMPLEX CERAMIC AND/OR METALLIC SHAPED BODIES HAVING A HIGHER MECANICAL STRENGHT AFTER DEBINDING AND BEFORE SINTERING**

(71) Applicant: Nanoe, 91160 Ballainvilliers (FR)
(72) Inventor: BOUCHET-DOUMENQ, Guillaume, 91170 Viry-Châtillon (FR); FAYE, Romain, 93260 Les Lilas (FR)
(74) Representative: Icosa

(57) **Abstract**

The present invention relates to compositions suitable for 3D printing in the form of filaments, or other 3D printing feeding forms. The composition of the invention comprises: a sinterable powder, which may be a metal and/or ceramic powder, and an organic binder that comprises (i) a thermoplastic elastomeric phase; and (ii) from 20% to 60% (w/w) of at least one functionalized thermoplastic polymer. The invention further relates to coils made of filaments of the composition, and to devices able to operate and use the filaments/and or the coils for manufacturing tridimensional objects. The invention also relates to a method for producing a shaped green body by 3D printing as well as to a shaped green body or a shaped body obtained by said method.

## Description

### FIELD OF INVENTION

The present invention relates to compositions suitable for 3D printing in the form of filaments, or other 3D printing feeding forms. The composition of the invention comprises: a sinterable powder, which may be a metal and/or ceramic powder, and an organic binder that comprises (i) a thermoplastic elastomeric phase; and (ii) from 20% to 60% (w/w) of at least one functionalized thermoplastic polymer. The invention further relates to coils made of filaments of the composition, and to devices able to operate and use the filaments/and or the coils for manufacturing tridimensional objects. The invention also relates to a method for producing a shaped green body by 3D printing as well as to a shaped green body or a shaped body obtained by said method.

### BACKGROUND OF INVENTION

The fused deposition modelling (FDM) process is a very helpful technique for manufacturing all kind of shaped objects. In addition, FDM is considered as an affordable and precise method for 3D printing.

Generally, FDM works by laying down material in layers. In FDM, the model (or part of it) is produced by extruding small beads or streams of material which harden immediately to form layers. In this technique, a filament of thermoplastic material is fed into an extrusion nozzle head (3D printer extruder). The nozzle head heats the material and turns the flow on and off. Typically, stepper motors or servo motors are employed to move the extrusion head and adjust the flow. The printer usually has 3 axes of motion.

In the particular case of ceramic and/or metal FDM 3D printing, a green body is firstly obtained. The green body is usually debinded from the non-ceramic and/or non-metal material and sintered to the final form of the 3D printed object. Generally, the debinding step is achieved by chemical means; especially by dissolving the organic part of the green body with a suitable solvent. Then, sintering takes place by thermal treatment of the green body. Hence, the formerly melted material should not melt during the sintering step.

However, after being debinded and before the sintering step, the shaped body often loses its physical integrity, especially its mechanical strength so that it is hard to manufacture complex shaped objects.

Thus, there is a need to provide feedstocks for 3D printing objects that may be chemically debinded in a polar solvent (such as acetone) in a reasonable time, preferably lower than 2 days, while keeping good mechanical properties: (i) no cracking of the object after debinding and (ii) no disintegration of said object.

### SUMMARY

Thus, the present invention relates to a composition suitable for 3D printing, said composition being in the form of a filament and comprising:
- a metal and/or ceramic powder; and
- an organic binder comprising:
   ∘ a thermoplastic elastomeric phase; and
   ∘ from 20% to 60% (w/w), preferably from 30% to 50% (w/w), of at least one functionalized thermoplastic polymer
      wherein the functionalized thermoplastic polymer is not a thermoplastic elastomeric phase.

According to one embodiment, the thermoplastic elastomeric phase is soluble in a polar solvent, preferably selected from aprotic polar solvent, even more preferably is acetone.

According to one embodiment, the thermoplastic elastomeric phase comprises or consists of at least one thermoplastic elastomeric polymer, preferably is an acrylic polymer, more preferably is a copolymer of acrylates and methacrylates.

According to one embodiment, the functionalized thermoplastic polymer is selected from thermoplastic (co)polymers modified with one or more functional groups, said functional group being individually selected from hydroxyl, ether, oxo, ester, carboxylic acid, carboxylic acid anhydride, thiol, amine and amide; preferably the functionalized thermoplastic polymer is selected from a carboxylic acid or carboxylic acid anhydride modified polyolefin; more preferably is a carboxylic acid or carboxylic acid anhydride modified poly(propylene).

According to one embodiment, the organic binder further comprises at least one additive, preferably selected from hardening agents, viscosifying agents and plastifying agents, more preferably is a hardening agent such as a polyamide.

According to one embodiment, the functionalized thermoplastic polymer is insoluble in a polar solvent.

According to one embodiment, the thermoplastic elastomeric phase and the functionalized thermoplastic polymer have a viscosity, at 120°C, ranging from 100 mPa.s to 1000 mPa.s, measured by capillary rheometer.

According to one embodiment, the ceramic and/or metal powder is selected from ceramic powder comprising or consisting of one or more minerals, preferably selected from native elements, carbides, sulfides, halides, oxides, hydroxides, carbonates, borates, sulfates, chromates, nitrates, molybdates, tungstates, phosphates, arsenates, vanadates, silicates and aluminosilicates; and metal powder comprising or consisting of one or more component selected from alkali metals, alkaline earth metals, lanthanides, actinides, transition metals, poor metals, metalloids, metal oxides, metal carbides, metal borides and metal nitrides, preferably wherein said ceramic and/or metal powder comprises or consists of 316L stainless steel.

According to one embodiment, the ceramic and/or metal powder presents a specific surface ranging from 0.5 to 30 m²/g, measured by a surface area analyzer, preferably said analyzer using a gas sorption method.

According to one embodiment, the thermoplastic elastomeric phase of the filament is chemically debindable and the at least one functionalized thermoplastic polymer is not chemically debindable.

The present invention also refers to a filament coil comprising at least one composition as defined above.

Another object of the invention concerns a 3D printer for producing shaped bodies, said 3D printer comprising the composition of the invention or the filament coil of the invention.

Another object of the invention concerns A method for producing a shaped body, said method comprising:
a) feeding 3D modeling printer, preferably a Fused Deposition Modeling printer, with a filament as described above; then
b) printing the shaped green body; then
c) chemically debinding a part of the green body by removing the at least one thermoplastic elastomeric phase of the binder of the filament composition by immersing the green body in a polar solvent; then
d) sintering the object of step (b) or step (c) by heating, leading to the shaped body; and
e) optionally smoothing the printed shaped green body of step (b) and/or the shaped body of step (d).

According to one embodiment, the smoothing step (e) is by contacting the surface of the shaped green body of step (b) and/or the surface of the shaped body of step (d) with a solvent selected from hexane, heptane, octane and mixtures thereof; gasoline, white spirit, benzene; toluene; ortho-, para-, or meta - dimethylbenzene and mixtures thereof; tetrahydrofuran and 2-methyltetrahydrofuran.

The present invention also refers to a shaped green body or a shaped body obtainable by the method of the invention.

### DEFINITIONS

In the present invention, the following terms have the following meanings:
- "**About**": preceding a figure means plus or less 10% of the value of said figure.
- "**Acrylic polymers**" or "**acrylics**": refers to a group of polymers obtained from monomers selected from esters of acrylic acid and/or methacrylic acid. Their formula is: 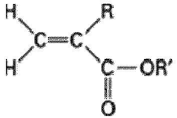 wherein:
   R is H (for acrylates) or CH₃ (for methacrylates); and
   R' is absent, H or a linear or branched alkyl, preferably selected from linear or branched C1-C10 alkyl, said alkyl group may be optionally functionalized with one or more organic groups.
- "**Additive**" refers to any chemical compound added in the composition of the invention in order to improve and/or achieve some specific chemical and/or physical properties.
- "**Ceramic**" refers to any clay-based material or any non-metallic and inorganic material, obtained upon heated. The term "ceramic" also includes any component encompassed by the definition of "ceramic" given by the American Society for Testing and Materials (ASTM) and that refers to any compound having a vitrified body or not, comprising a crystalline or partially crystalline structure, or of glass, and which is formed of substantially inorganic and non-metallic substance, by a melt which solidifies upon cooling, or which is formed and matured into same time or later by the action of heat. According to one embodiment, the ceramic is a porous ceramic such as pottery and faience. According to one embodiment, the ceramic is a vitrified ceramic such as stoneware and porcelain. According to one embodiment, the ceramic powder is sinterable.
- **"Ceramic injection molding (CIM)"** refers to any manufacturing process used to mass produce ceramic components or ceramic/metal composite, preferably with complex geometries. According to one embodiment, the CIM comprises four steps: mixing, injection, debinding and sintering.
- **"Ceramic and metal powder"** refers to any material under the form of a powder (i) either comprising a ceramic powder and a metallic powder, (ii) or which is a composite powder of a ceramic as defined above and a metal as defined below. According to one embodiment, the ceramic and metal powder is sinterable.
- **"3D-printing"** or **"additive manufacturing":** refers to any process for manufacturing three-dimensional solid objects from a digital file.
- **"Elastomeric":** refers to a polymer that displays rubber-like elasticity.
- **"Filament":** In the present description filament designates a 3D printer feeding form or **feedstock composition** that has the shape of a fine wire. Equivalent and interchangeable 3D printing feeding forms may be selected from at least one bullion, at least one rod or stick, at least one pellet or granule. A person skilled in the art can easily determine the form of the 3D printing material, depending on the type of the 3D printer used.
- **"Green body"** refers to a shaped object of a mixture comprising the ceramic and/or metallic material and various organic and/or inorganic additives. In one embodiment, the organic additives may be a mixture of polymers that in some cases, is removed by chemical or thermic means such as debinding and/or sintering.
- **"Metal"** refers to any element of the periodic classification selected from alkali metals, alkaline earth metals, lanthanides, actinides, transition metals, poor metals, and metalloids. According to one embodiment, the term "metal" also refers to any compound in which the corresponding atoms are linked by a metallic bond. According to one embodiment, the metal powder is sinterable.
- **"Organic binder"** refers to a portion of material, in a composition, consisting of organic molecules, and able to (i) agglomerate a metal and/or ceramic powder of said composition and optionally the others components of said composition; and (ii) that may be removed by a debinding step using practical means such as for example by chemical means and/or by heating.
- **"Polyamide"** refers to a family of polymers resulting from the polymerization of a monomer having both an amine function and a carboxylic acid function, or from the polycondensation of a dicarboxylic acid compound with a compound having two amine functions. According to one embodiment, the term "polyamide" refers to any macromolecular chain having made of repeating units linked each other by an amide bond.
- **"Polymers"** refers to materials comprising or consisting of macromolecular chains composed of many repeated subunits. According to the present invention, the term "polymers" includes "copolymers" and "homopolymers". **"Copolymers"** refers to any macromolecular chains having at least two different repeating units; copolymers can be alternating, periodic, statistical, random or block copolymers. **"Homopolymers"** refers to any macromolecular chains having only one single type of repeating unit.
- **"Room temperature"** refers to a temperature ranging from 20°C to 50°C, preferably ranging from 20°C to 30°C, more preferably is about 25°C.
- **"Shore durometer"** refers to any device for measuring the hardness of a material, especially for measuring the hardness of an elastomer, a polymer or a rubber. According to one embodiment, the shore durometer is the durometer HBD 100-0 manufactured by KERN&SOHN GmbH.
- **"Thermoplastic"** refers to a material which is capable of being repeatedly softened by heating and hardened by cooling. According to one embodiment, the thermoplastic compound is soft at room temperature. According to one embodiment, the thermoplastic compound is soft at a temperature ranging from 20°C to 200°C.
- **"Thermoplastic polymer"** refers to a polymer that is capable of being repeatedly softened by heating and hardened by cooling.
- **"Thermoplastic elastomeric phase"** refers to a material having both elastomeric properties and thermoplastic properties as defined above. According to one embodiment, the thermoplastic elastomeric phase is a mixture of at least one thermoplastic component (preferably a thermoplastic polymer) and at least one elastomer. According to one embodiment, the thermoplastic elastomeric phase is a copolymer having at least one elastomeric part and at least one thermoplastic part.
- **"Fused Deposition Modeling (FDM)"** refers to an additive manufacturing (AM) process in which a physical object is created directly from a computer-aided design (CAD) model using layer-by-layer deposition of a feedstock plastic filament material extruded through a nozzle.
- **"Functionalized thermoplastic polymer"** refers to a thermoplastic polymer as defined above, which was modified so that to introduce additional organic functions on its backbone. According to one embodiment, the functionalized thermoplastic polymer refers to a thermoplastic polymer having additional organic functions which did not result from the polymerization reaction for manufacturing said thermoplastic polymer but from a further chemical reaction after polymerization. In the present invention, the expression "functionalized thermoplastic polymer" does not refers to a thermoplastic elastomeric phase or a thermoplastic elastomeric (co)polymer. According to one embodiment, the organic functions of the functionalized thermoplastic polymer cannot be removed by debinding. According to one embodiment, the additional organic functions of the functionalized thermoplastic polymer do not come from monomer(s) used for polymerizing the thermoplastic polymer backbone but come from an organic compound that is not a monomer, used for modified the initial thermoplastic polymer backbone.

### DETAILED DESCRIPTION

The present invention relates to a composition suitable for 3D printing. Especially, the composition of the invention comprises or consists of a sinterable powder and an organic binder.

According to one embodiment, the organic binder comprises or consists of two phases:
∘ a thermoplastic elastomeric phase; and
∘ at least one functionalized thermoplastic polymer.

According to one embodiment, the organic binder comprises or consists of two phases:
∘ a thermoplastic elastomeric phase; and
∘ at least 20% (w/w), preferably from 20% to 60% (w/w) more preferably from 30% to 50% (w/w), of at least one functionalized thermoplastic polymer, by weight to the total weight of the organic binder.

According to one embodiment, the composition comprises or consists of:
- from 40% to 60 % (v/v) of said metal and/or ceramic powder; and
- from 40% to 60% (v/v) of said organic binder; in volume to the total volume of said composition; said organic binder comprising or consisting of:
   ∘ a thermoplastic elastomeric phase; and
   ∘ at least 20% (w/w), preferably from 20% to 60% (w/w) more preferably from 30% to 50% (w/w), of at least one functionalized thermoplastic polymer, by weight to the total weight of the organic binder.

According to one embodiment, the composition comprises or consists of:
- 50% (v/v) a stainless steel powder (SAE 316L grade),
- 50% (v/v) an organic binder comprising:
   ∘ Kurarity LA2250™ (acrylic thermoplastic elastomer), and
   ∘ from 30% (w/w) to 50% (w/w) of Fusabond P353™ (functionalized thermoplastic polymer).

According to one embodiment, the composition of the invention comprises from 40% to 60 % (v/v), preferably from 45% to 55% (v/v), more preferably from 50% to 55% (v/v), even more preferably about 50% (v/v) of said metal and/or ceramic powder, the percentages being expressed by volume relative to the total volume of the composition.

According to one embodiment, the composition of the invention comprises from 40% to 45% (v/v), from 40% to 50% (v/v), from 40% to 55 % (v/v), from 40% to 60% (v/v), from 55% to 60% (v/v), from 50% to 60% (v/v), or from 45% to 60% (v/v), of said metal and/or ceramic powder, the percentages being expressed by volume relative to the total volume of the composition.

According to one embodiment, the composition of the invention comprises about 40%, 41%, 42%, 43%, 44%, 45%, 46%, 47%, 48%, 49%, 50%, 51%, 52%, 53%, 54%, 55%, 56%, 57%, 58%, 59%, or 60% (v/v) of said metal and/or ceramic powder, the percentages being expressed by volume relative to the total volume of the composition.

According to one embodiment, the metal powder comprises or consists of one or more component selected from alkali metals, alkaline earth metals, lanthanides, actinides, transition metals, poor metals, metalloids, metal oxides, metal carbides, metal borides and metal nitrides.

According to one embodiment, the metal powder may be any material suitable to be involved in a Metal Injection Molding (MIM), preferably is an alloy, more preferably is selected from alloys of cobalt-chrome, stainless steel, titanium alloys and tungsten carbides.

According to one embodiment, the metal powder is selected from yttrium, yttrium oxide, copper, tan, aluminum, cerium, cerium oxides, uranium, uranium oxides, iron, iron oxides, steel, tungsten, tungsten carbide, strontium titanate, silicon carbide, silicon dioxide, aluminum oxide, zirconium dioxide, titanium dioxide, transition metal oxides such as cobalt dioxide or manganese dioxide, barium, barium titanate, lead zirconate titanate (LZT) and their mixtures thereof.

According to one embodiment, the metal powder is a magnetic powder, preferably a powder comprising or consisting of iron, iron oxides and/or nickel.

According to one embodiment, the metal powder is a piezoelectric powder, preferably selected from titanates, ferrites, tantalates, nobiates and tungsten-bronze compounds, more preferably from barium titanate, lead titanate, potassium nobiate, lithium nobiate, bismuth ferrite, lithium tantalate and lead zirconate titanate (LZT).

In one embodiment, the composition comprises a metal powder such as for example stainless steel.

According to one embodiment, the metal powder comprises or consist of any material that may be sintered.

According to one embodiment, the ceramic powder comprises or consist of one or more minerals, preferably selected from native elements, carbides, sulfides, halides, oxides, hydroxides, carbonates, borates, sulfates, chromates, nitrates, molybdates, tungstates, phosphates, arsenates, vanadates, silicates and aluminosilicates.

According to one embodiment, the ceramic powder comprises or consist of any material that may be sintered.

According to one embodiment, the ceramic powder is a clay, that-is-to say a silicate- or aluminosilicate-based material. According to one embodiment, the ceramic powder is a porcelain, a faience, a pottery or a stoneware.

According to one embodiment, the native element is selected from carbon, sulfur, native silver, native gold, native copper and silicide.

According to one embodiment, the carbide may be a silicon carbide or a tungsten carbide.

According to one embodiment, the ceramic powder may be any material suitable to be involved in a Ceramic Injection Molding (CIM).

According to one embodiment, the ceramic and metal powder comprises or consists of any powder of one or more metals and ceramics as defined above.

According to one embodiment, the ceramic and metal powder comprises or consists of any material that may be sintered.

In one embodiment, the composition comprises a ceramic powder selected from alumina, zirconia toughened alumina, zirconium oxide, zirconium oxide-b, silicon carbide, tungsten carbide, cobalt doped tungsten and mixtures thereof.

According to one embodiment, the ceramic and/or metal powder is selected from alumina, zirconia toughened alumina, zirconium oxide, zirconium oxide-b (black zirconia), silicon carbide, silicon, titanium dioxide, tungsten, tungsten carbide and stainless-steel powders.

According to one embodiment, the composition of the invention or the organic binder comprises a thermoplastic elastomeric phase.

According to one embodiment, the amount of the thermoplastic elastomeric phase in the organic binder, is at least 40% (w/w) by weight to the total weight of the organic binder. According to one embodiment, the amount of the thermoplastic elastomeric phase in the organic binder, ranges from 40% to 80% (w/w), preferably from 50%to 70% (w/w) by weight to the total weight of the organic binder.

According to one embodiment, the amount of the thermoplastic elastomeric phase in the organic binder, ranges from 40% to 70% (w/w), preferably from 40%to 60% (w/w), more from 40% to 50% (w/w) by weight to the total weight of the organic binder. According to one embodiment, the amount of the thermoplastic elastomeric phase in the organic binder, ranges from 50% to 80% (w/w), preferably from 60%to 80% (w/w), more from 70% to 80% (w/w) by weight to the total weight of the organic binder.

According to one embodiment, the amount of the thermoplastic elastomeric phase in the organic binder, is about 40%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79% or 80% by weight to the total weight of the organic binder.

According to one embodiment, the thermoplastic elastomeric phase comprises or consists of at least one thermoplastic elastomeric copolymer, preferably selected from block copolymers having at least one first block with thermoplastic properties and at least one second block with elastomeric properties.

According to one embodiment, the thermoplastic elastomeric phase comprises or consists of a mixture of at least one thermoplastic copolymer and at least one elastomer (also called elastomeric polymer).

According to one embodiment, the thermoplastic elastomeric copolymer has a first block having a glass transition temperature (Tᵥ) higher than 60°C and a second block having a glass transition temperature (Tᵥ) lower than -20°C, preferably lower than -30°C, even more preferably less than -40°C.

According to one embodiment, the first block having thermoplastic properties or the thermoplastic polymer has a glass transition temperature (T_{g}) higher than 60°C.

According to one embodiment, the first block having thermoplastic properties or the thermoplastic polymer, is a homopolymer resulting from the polymerization of monomers selected from acrylic acid, benzyl methacrylate, bisphenol A terephthalate, bisphenol carbonate, bisphenol F carbonate, bisphenol Z carbonate, cis-butadiene, N-tert-butylacrylamide, 2-tert-butylaminoethyl methacrylate, tert-butyl vinyl ether, cyclohexyl methacrylate, cyclohexyl vinyl ether, N,N-dimethylacrylamide, 2,6-dimethyl-1,4-phenylene oxide, dimethyl styrene, hexyl acrylate, 2-dydroxyethyl methacrylate, methacrylic acid, methacrylic anhydride, methacrylonitrile, 4-methoxystyrene, methyl methacrylate, methylstyrene, phenyl methacrylate, styrene, trimethylstyrene, vinyl alcohol, vinyl 4-tert- butylbenzoate, vinyl butyral, vinyl carbazole, vinyl cyclohexanoate, vinyl formal, vinyl pivalate, 2- vinylpyridine and 4-vinylpyridine.

According to one embodiment, the second block having elastomeric properties or the elastomer has a glass transition temperature (Tᵥ) lower than -20°C, preferably lower than -30°C, even more preferably lower than -40°C.

According to one embodiment, the second block having elastomeric properties or the elastomer is selected from any homopolymer resulting from the polymerization of monomers selected from acetaldehyde, allyl glycidyl ether, trans- butadiene, 1-butene, n-butyl acrylate, sec-butyl acrylate, butyl glycidyl ether, butyl vinyl ether, ε-caprolactone, cis-chlorobutadiene, dodecyl methacrylate, dodecyl vinyl ether, epichlororhydrin, 1, 2-epoxybutane, 1,2-epoxydecane, 1,2-epoxyoctane, 2-ethoxyethyl acrylate, ethyl acrylate, high density polyethylene (HDPE), ethylene adipate, ethylene malonate, ethylene oxide, 2-ethylhexyl acrylate, 2-ethylhexyl methacrylate, ethyl vinyl ether, formaldehyde, isobutyl acrylate, isobutylene, cis-isoprene, trans-isoprene, methyl glycidyl ether, methylphenylsiloxane, methyl vinyl ether, octadeycl methacrylate, 1-octene, octyl methacrylate, propylene oxide, propyl vinyl ether, tetramethylene adipate, trimethylene oxide and vinylidene fluoride.

According to one embodiment, the elastomer or the block having elastomeric properties is selected from natural rubber (i.e. cis-1,4-polyisoprene), polybutadiene, styrene-butadiene rubber (SBR), polyisobutylene, polychloroprene, copolymer butadiene-acrylonitrile (also called nitrile butadiene rubber (NBR), copolymer ethylene-propylene, polyethers, silicon rubbers, fluoroelastomers, perfluoroelastomers, copolymers ethylene-vinyl acetate (EVA), chlorosulfonated polyethylene.

According to one embodiment, the thermoplastic elastomeric phase comprises or consists of at least one thermoplastic elastomeric polymer, preferably is an acrylic polymer, more preferably is a copolymer of acrylates and methacrylates.

According to one embodiment, the thermoplastic elastomeric polymer is a triblock copolymer of poly(methyl methacrylate) and poly(n-butyl acrylate). According to one embodiment, the thermoplastic elastomeric polymer has a "B-A-B" structure wherein A is a poly(*n*-butyl acrylate) block and B is a poly(methyl methacrylate) block. According to one embodiment, the thermoplastic elastomeric polymer is a triblock copolymer Kurarity™ manufactured by DuPont, preferably is Kurarity LA2250™.

In the present invention, Kurarity LA2250™ refers to a copolymer of poly(methyl methacrylate) (PMMA) and of poly(n-butyl acrylate) (pBA) with a triblock backbone B-A-B wherein B represents a block of PMMA and A represents a block of pBA, and wherein the total content of the PMMA block is about 10% by weight to the total weight of the triblock copolymer chain.

According to one embodiment, the amount of the functionalized thermoplastic polymer in the organic binder, is at least 20% (w/w) by weight to the total weight of the organic binder. According to one embodiment, the amount of the functionalized thermoplastic polymer in the organic binder, ranges from 20% to 60% (w/w), preferably from 30% to 50% (w/w) by weight to the total weight of the organic binder.

According to one embodiment, the amount of the functionalized thermoplastic polymer in the organic binder, ranges from 20% to 50% (w/w), preferably from 20%to 40% (w/w), more preferably from 20% to 30% (w/w) by weight to the total weight of the organic binder. According to one embodiment, the amount of the functionalized thermoplastic polymer in the organic binder, ranges from 20% to 60% (w/w), preferably from 30%to 60% (w/w), more preferably from 40% to 60% (w/w), even more preferably 50% to 60% (w/w) by weight to the total weight of the organic binder.

According to one embodiment, the amount of the functionalized thermoplastic polymer in the organic binder, is about 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59% or 60% (w/w) by weight to the total weight of the organic binder.

According to one embodiment, the composition of the invention or the organic binder comprises a functionalized thermoplastic polymer.

According to one embodiment, the functionalized thermoplastic polymer is not poly(methyl methacrylate).

According to one embodiment, the thermoplastic polymer before its functionalization is selected from thermoplastic polymers as defined above and/or well-known by the skilled artisan.

According to one embodiment, the functionalized thermoplastic polymer is a thermoplastic polymer but does not comprise any elastomeric parts. According to one embodiment, the functionalized thermoplastic polymer is a thermoplastic non-elastomeric polymer that has been modified with organic functional groups able to interact with the sinterable powder of the invention, preferably with the metal and/or ceramic powder as defined above.

According to one embodiment, the functionalized thermoplastic polymer is a thermoplastic non-elastomeric polymer that has been modified in order to introduce additional organic functional groups that were not present in the initial polymer backbone. According to one embodiment, the functionalized thermoplastic polymer is a thermoplastic polymer grafted with at least one organic functional group. According to one embodiment, the organic functional group is selected from hydroxyl, ether, oxo, ester, carboxylic acid, carboxylic acid anhydride, thiol, primary, secondary or tertiary amine, amide and silane.

According to one embodiment the functionalized thermoplastic polymer is a thermoplastic polyolefin modified with one or more groups selected from hydroxyl, ether, oxo, ester, carboxylic acid, carboxylic acid anhydride, thiol, primary, secondary or tertiary amine, amide and silane.

According to one embodiment, the organic functional group may be inserted inside the polymer backbone (main chain) and/or in any side chain of the functionalized thermoplastic polymer.

According to one embodiment, the functionalized thermoplastic polymer is a polyethylene or polypropylene modified with a carboxylic acid anhydride group.

According to one embodiment, the functionalized thermoplastic polymer is a polypropylene modified with maleic anhydride. According to one embodiment, the functionalized thermoplastic polymer is Fusabond P353™ manufactured by DuPont.

Fusabond P353™ has a melt flow rate at 160°C and 325g, of 22.4 g/10 min (ASTM D1238).

According to one embodiment, the composition or the organic binder as defined above may comprise at least one additive.

According to one embodiment, the additive may be selected from hardening agents, viscosifying agents, pigments and plastifying agents.

As previously discussed, the invention relates to a composition as defined above, in the form of a filament suitable for 3D printing.

The diameter of the filament can be determined on the basis of the type of impression and easily determined by a person skilled in the art.

In one embodiment, the filament presents a diameter from about 1 to about 3 mm. In one embodiment, the diameter ranges from about 1.75 to about 2.85 mm. In one embodiment, the diameter is 1.75 mm. In one embodiment, the diameter is 2.85 mm. According to one embodiment, the diameter of the filament is measured by an electronic slide gauge, preferably the electronic slide gauge is the RS Pro® electronic digital caliper 150 mm/6. According to a preferred embodiment, the diameter of the filament is measured by a laser diameter measurement, preferably with the ODAC® 16XY device manufactured by Zumbach.

In one embodiment, the diameter of the filament is regular throughout its length.

Furthermore, the advantageous mechanical properties of the filament do not restrain its length.

In one embodiment, the filament presents a length from about 1 m to about 3000 m. In one embodiment, the filament length ranges from about 40 m to about 1500 m, preferably from about 80 m to about 1200 m, more preferably from about 90 m to about 1100 m, even more preferably is about 1000 m. In one embodiment, the filament length ranges from about 10 m to about 150 m, preferably from about 10 m to about 100 m, more preferably from about 30 m to about 70 m, even more preferably is about 50 m.

In one embodiment, the filament is easy to flexible and not easy to break. In one embodiment, the filament has a shore D hardness of at least 30, preferably from 30 to 100, more preferably from 30 to 40 at 20°C measured by a shore durometer.

In one embodiment, the filament is easy to flexible and not easy to break. In one embodiment, the filament has a shore D hardness of at least 40 at 20°C measured by a shore durometer.

According to one embodiment, the filament has a radius curvature of breaking ranging from more than 0 cm to 20 cm, preferably from more than 0 cm to 10 cm, more preferably from 3 cm to 7 cm. According to one embodiment, the filament has a radius curvature of breaking of about 5 cm. According to one embodiment, the filament has a radius curvature of breaking of about 2 cm, 3 cm, 4 cm, 5 cm, 6 cm, 7 cm, or 8. According to one embodiment, the radius curvature of breaking is determined by the methods and devices well-known by the skilled artisan. Advantageously, the filament is flexible and can be coiled.

According to one embodiment, the filament has a crushing resistance ranging from 20 MPa to 50 MPa, preferably from 25MPa to 40 MPa. According to one embodiment, the filament has a crushing resistance higher than 40MPa. According to one embodiment, the crushing resistance is determined by the methods and devices well-known by the skilled artisan.

Advantageously, when the filament has a crushing resistance of 40MPa or higher, an object may be printed from the filament of the invention with a printing outlet having a mean diameter of 0.2 mm or 0.4 mm.

Advantageously, when the filament has a crushing resistance ranging from 20 MPa to 40 MPa, an object may be printed from the filament of the invention with a printing outlet having a mean diameter of 0.8 mm or 0.6 mm.

The present invention also relates to a coil comprising at least one composition in the form of filament according to the invention.

In one embodiment, the coil has a weight ranging from 100 g to 3 kg. In one embodiment, the coil has a weight ranging from 300 g to 2.5 kg. In one embodiment, the coil has a weight ranging from 400 g to 2.5 kg. In one embodiment, the coil has a weight ranging from 500 g to 2 kg. In one embodiment, the coil has a weight of 1 kg.

In another aspect, the invention relates to a device implementing the filament or the filament coil according to the invention. In one embodiment, the device is a 3D printer, preferably a FDM type 3D printer.

The present invention relates to a process for manufacturing a shaped body, namely for printing of a 3D object.

According to one embodiment, the method of the invention for producing a shaped body comprises using the filament as defined above.

According to one embodiment, the method of the invention comprises a step for feeding 3D modeling printer (step (a)), preferably a Fused Deposition Modeling printer, with a filament as defined above.

According to one embodiment, the method of the invention further comprises a step for printing the shaped green body (step (b)).

According to one embodiment, the print speed of step (b) ranges from 5 mm.s⁻¹ to 100 mm.s⁻¹. According to one embodiment, the print speed of step (b) is about 5 mm.s⁻¹, 10 mm.s⁻¹, 15 mm.s⁻¹, 20 mm.s⁻¹, 25 mm.s⁻¹, 30 mm.s⁻¹, 35 mm.s⁻¹, 40 mm.s⁻¹, 45 mm.s⁻¹, 50 mm.s⁻¹, 55 mm.s⁻¹, 60 mm.s⁻¹, 65 mm.s⁻¹, 70 mm.s⁻¹, 75 mm.s⁻¹, 80 mm.s⁻¹, 85 mm.s⁻¹, 90 mm.s⁻¹, 95 mm.s⁻¹ or 100 mm.s⁻¹.

According to one embodiment, the thickness for each printed layer of the shaped green body ranges from 0.05 mm to 0.5 mm. According to one embodiment, the thickness for each printed layer of the shaped green body is about 0.05 mm, 0.1 mm, 0.15 mm, 0.2 mm, 0.25 mm, 0.3 mm, 0.35 mm, 0.4 mm, 0.45 mm or 0.5 mm.

According to one embodiment, the method of the invention for producing a shaped body further comprises a step for debinding a part of the green body (step (c)). According to one embodiment, the debinding step is a chemical debinding step. According to one embodiment, the chemical debinding step is carried out by removing the at least one thermoplastic elastomeric phase of the binder of the filament composition.

According to one embodiment, removing the thermoplastic elastomeric phase of the organic binder is carried out by immersing the green body in a polar solvent. According to one embodiment, the polar solvent is a polar aprotic solvent, preferably selected from acetone, ethyl acetate, dimethylsulfoxide, acetonitrile, dimethylformamide, tetrahydrofuran, methyl acetate, butyl acetate, N-methylpyrrolidone, propylene carbonate, methyl ethyl ketone (MEK), cyclohexanone, methyl isopropyl ketone, and methyl isobutyl ketone; preferably is acetone.

According to one embodiment, the polar solvent is a polar protic solvent, preferably selected from water, acetic acid, formic acid, and alcohols such as for example, methanol, glycerol, ethanol, n-propanol, or n- butanol.

According to one embodiment, the chemical debinding by immersion in the solvent is carried out during a time period ranging from 1h to 120h, preferably from 6h to 96h, more preferably from 12h to 72h. According to one embodiment, the chemical debinding by immersion in the solvent is carried out during a time period of about 1h, 2h, 3h, 4h, 5h, 6h, 7h, 8h, 9h, 10h, 11h, 12h, 13h, 14h, 15h, 16h, 17h, 18h, 19h, 20h, 21h, 22h, 23h, 24h, 25h, 26h, 27h, 28h, 29h, 30h, 31h, 32h, 33h, 34h, 35h, 36h, 37h, 38h, 39h, 40h, 41h, 42h, 43h, 44h, 45h, 46h, 47h, 48h, 49h, 50h, 51h, 52h, 53h, 54h, 55h, 56h, 57h, 58h, 59h, 60h, 61h, 62h, 63h, 64h, 65h, 66h, 67h, 68h, 69h, 70h, 71h or 72h.

According to one embodiment, the method of the invention further comprises a step for sintering (step (d)) the object of step (b) or step (c) by heating, leading to the shaped body.

According to one embodiment, the sintering is by heating at a temperature ranging from about 800°C to 2300°C, preferably from 800°C to about 1700°C. According to one embodiment, when the sinterable powder is silicon carbide (SiC), the sintering is by heating at a temperature ranging from about 800°C to 2300°C.

According to one embodiment, the metal-powder-containing green bodies are sintered at a temperature from about 800°C to about 1300°C, preferably under vacuum.

According to one embodiment, the ceramic-powder-containing green bodies are sintered at a temperature from about 1400°C to about 1700°C, preferably in the presence of air.

According to one embodiment, the heating gradient of step (d) ranges from 1°C/h to 20°C/h, preferably ranges from 2°C/h to 10°C/h. According to one embodiment, the heating gradient of step (d) is about 1°C/h, 2°C/h, 3°C/h, 4°C/h, 5°C/h, 6°C/h, 7°C/h, 8°C/h, 9°C/h, 10°C/h, 11°C/h or 12°C/h.

According to one embodiment, the method of the invention further comprises a step for smoothing (step (e)) the printed shaped green body of step (b) and/or the shaped body of step (d). According to one embodiment, the step for smoothing the printed shaped green body of step (b) is carried out by any conventional method well-known by the skilled artisan. According to one embodiment, the step for smoothing the printed shaped green body of step (b) is carried out by putting said printed shaped green body under a bell of solvent vapor so that it dissolves its surface.

According to one embodiment, the method of the invention comprises or consists of the following steps:
a) feeding 3D modeling printer, preferably a Fused Deposition Modeling printer, with a filament as described above;
b) printing the shaped green body;
c) chemically debinding a part of the green body by removing the at least one thermoplastic elastomeric phase of the binder of the filament composition by immersing the green body in a polar solvent;
d) sintering the object of step (b) or step (c) by heating, leading to the shaped body; and
e) optionally smoothing the printed shaped green body of step (b) and/or the shaped body of step (d).

This invention also relates to a shaped green body or a shaped body obtainable by the method as described above.

### BRIEF DESCRIPTION OF THE DRAWINGS

**Figure 1** is a set of photographs showing a 3D-printing stud from a witness composition before (Figure 1a) and after (Figure 1b) chemical debinding with acetone.
**Figure 2** is a photograph showing 3D-printing objects from a composition of the invention after chemical debinding with acetone.

### EXAMPLES

The present invention is further illustrated by the following examples.

### Example 1: Compositions of the invention for 3D printing

Several compositions of the invention have been prepared and consists of:
- 50% (v/v) a stainless steel powder (SAE 316L grade),
- 50% (v/v) an organic binder comprising:
   ∘ Kurarity LA2250™ (acrylic thermoplastic elastomer), and
   ∘ from 30% (w/w) to 50% (w/w) of Fusabond P353™ (functionalized thermoplastic polymer).

Kurarity LA2250™ is a copolymer of poly(methyl methacrylate) (PMMA) and of poly(*n*-butyl acrylate) (pBA) with a triblock backbone B-A-B wherein B represents a block of PMMA and A represents a block of pBA, and wherein the total content of the PMMA block is about 10% by weight to the total weight of the triblock copolymer chain.

Fusabond P353™ is a polypropylene modified with maleic anhydride. Fusabond P353™ has a melt flow rate at 160°C and 325g, of 22.4 g/10 min (ASTM D1238).

The amounts of the stainless steel powder and of the organic binder are expressed by volume relative to the volume of the total composition. The acrylic thermoplastic elastomer and the functionalized thermoplastic polymer are expressed by weight to the total weight of the organic binder.

The ingredients are mixed at 140°C, either by putting them in a kneader or by using a twin-screw extruder in order to obtain a homogenous dispersion of the powder within the obtained compositions.

Then, the obtained compositions are extruded through a single-screw extruder in the form of filaments.

### Example 2: Filament mechanical properties

The aim of the experiment is to evidence that the nature of the organic binder in the composition of the invention provides shaped objects by 3D printing which have improved mechanical strength after being chemical debinded and before the sintering step.

For this purpose, a comparison has been implemented between the compositions as defined in example 1, and the corresponding compositions in which the amount of P353 is reduced to about 13% by weight to the total weight of the organic binder (called "witness composition").

The compositions have been 3D-printed under the form of studs and then chemically debinded with acetone.

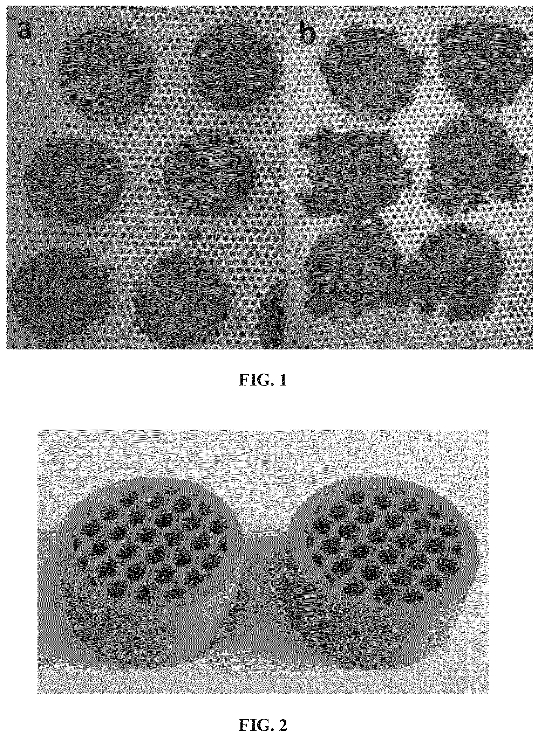

Figure 1 shows a set of photographs of the objects printed from the witness compositions, before (Figure 1a) and after (Figure 1b) chemical debinding. Figure 1 evidences that when the amount of Fusabond P353™ is reduced inside the organic binder, the resulting filament does not provide shaped printed objects with a good mechanical strength after the chemical debinding step.

To the contrary, with the compositions of the invention comprising from 30% to 50% (w/w) of Fusabond P353™ in the organic binder, it is possible to achieve shaped objects that keep suitable mechanical strength after being debinded and before the sintering step (see Figure 2).

## Claims

1. A composition suitable for 3D printing, said composition being in the form of a filament and comprising:
- a metal and/or ceramic powder; and
- an organic binder comprising:
∘ a thermoplastic elastomeric phase; and
∘ from 20% to 60% (w/w), preferably from 30% to 50% (w/w), of at least one functionalized thermoplastic polymer;
wherein the functionalized thermoplastic polymer is not a thermoplastic elastomeric phase.

2. The composition according to claim **1,** wherein the thermoplastic elastomeric phase is soluble in a polar solvent, preferably selected from aprotic polar solvent, even more preferably is acetone.

3. The composition according to claim **1** or claim **2,** wherein the thermoplastic elastomeric phase comprises or consists of at least one thermoplastic elastomeric polymer, preferably is an acrylic polymer, more preferably is a copolymer of acrylates and methacrylates.

4. The composition according to any one of claims **1** to **3,** wherein the functionalized thermoplastic polymer is selected from thermoplastic (co)polymers modified with one or more functional groups, said functional group being individually selected from hydroxyl, ether, oxo, ester, carboxylic acid, carboxylic acid anhydride, thiol, amine and amide; preferably the functionalized thermoplastic polymer is selected from a carboxylic acid or carboxylic acid anhydride modified polyolefin; more preferably is a carboxylic acid or carboxylic acid anhydride modified poly(propylene).

5. The composition according to any one of claims **1** to **4,** wherein the organic binder further comprises at least one additive, preferably selected from hardening agents, viscosifying agents and plastifying agents, more preferably is a hardening agent such as a polyamide.

6. The composition according to any one of claims **1** to **5,** wherein the functionalized thermoplastic polymer is insoluble in a polar solvent.

7. The composition according to any one of claims **1** to **6,** wherein the thermoplastic elastomeric phase and the functionalized thermoplastic polymer have a viscosity, at 120°C, ranging from 100 mPa.s to 1000 mPa.s, measured by capillary rheometer.

8. The composition according to any one of claims **1** to **7,** wherein the ceramic and/or metal powder is selected from ceramic powder comprising or consisting of one or more minerals, preferably selected from native elements, carbides, sulfides, halides, oxides, hydroxides, carbonates, borates, sulfates, chromates, nitrates, molybdates, tungstates, phosphates, arsenates, vanadates, silicates and aluminosilicates; and metal powder comprising or consisting of one or more component selected from alkali metals, alkaline earth metals, lanthanides, actinides, transition metals, poor metals, metalloids, metal oxides, metal carbides, metal borides and metal nitrides, preferably wherein said ceramic and/or metal powder comprises or consists of 316L stainless steel.

9. The composition according to any one of claims **1** to **8,** wherein the ceramic and/or metal powder presents a specific surface ranging from 0.5 to 30 m²/g, measured by a surface area analyzer, preferably said analyzer using a gas sorption method.

10. The composition according to any one of claims **1** to **9,** wherein the thermoplastic elastomeric phase of the filament is chemically debindable and the at least one functionalized thermoplastic polymer is not chemically debindable.

11. A filament coil comprising at least one composition as described in any one of claims **1** to **10.**

12. A 3D printer for producing shaped bodies, said 3D printer comprising the composition according to any one of claims **1** to **10** or the filament coil according to claim **11.**

13. A method for producing a shaped body, said method comprising:
a) feeding 3D modeling printer, preferably a Fused Deposition Modeling printer, with a filament as described in any one of claims **1** to **10;** then
b) printing the shaped green body; then
c) chemically debinding a part of the green body by removing the at least one thermoplastic elastomeric phase of the binder of the filament composition by immersing the green body in a polar solvent; then
d) sintering the object of step (b) or step (c) by heating, leading to the shaped body; and
e) optionally smoothing the printed shaped green body of step (b) and/or the shaped body of step (d).

14. The method according to claim **13,** wherein the smoothing step (e) is by contacting the surface of the shaped green body of step (b) and/or the surface of the shaped body of step (d) with a solvent selected from hexane, heptane, octane and mixtures thereof; gasoline, white spirit, benzene; toluene; ortho-, para-, or meta - dimethylbenzene and mixtures thereof; tetrahydrofuran and 2-methyltetrahydrofuran.

15. A shaped green body or a shaped body obtainable by the method according to claim **13** or claim **14.**
